# EUROPEAN PATENT SPECIFICATION

(11) **EP 1 858 759 B1**
(45) Date of publication and mention of the grant of the patent: **05.08.2009**
(21) Application number: 06732946.6
(22) Date of filing: 13.03.2006
(51) Int. Cl.: B64F 1/32, B60P 1/38, B65G 67/08

(54) **VEHICLE FOR MOVING SEPARATE PIECES OF LUGGAGE BETWEEN A LUGGAGE DEPOT AND AN AEROPLANE**
FAHRZEUG ZUR BEWEGUNG EINZELNER GEPÄCKSTÜCKE ZWISCHEN EINEM GEPÄCKDEPOT UND EINEM FLUGZEUG
VEHICULE DESTINE A DEPLACER DES BAGAGES SEPARES ENTRE UN DEPOT DE BAGAGES ET UN AVION

(30) Priority: 14.03.2005 NL 1028534; 02.06.2005 NL 1029175
(43) Date of publication of application: 28.11.2007
(73) Proprietor: VANDERLANDE INDUSTRIES NEDERLAND B.V., 5466 RB Veghel (NL)
(72) Inventor: VAN DEN GOOR, Jacobus, Marie, NL-5674 SH Nuenen (NL); BODEWES, Harmannus, Josephus, Amoldus, NL-5403 LC Uden (NL)
(74) Representative: Dorna, Peter
(86) International application number: PCT/NL2006/000132
(87) International publication number: WO 2006/098617

(56) References cited:
- WO-A-01/51356
- WO-A-20/04071868
- GB-A- 814 714
- US-A- 3 066 817

## Description

The present invention relates to a vehicle for moving separate pieces of luggage between a luggage depot and an aeroplane, which vehicle comprises a wheeled frame, which wheeled frame is provided with conveying means comprising a number of conveying elements disposed above and/or beside one another for conveying separate pieces of luggage between ends of the respective conveying elements with respect to the frame, which vehicle further comprises a bridging conveyor system for conveying pieces of luggage between the respective conveying elements and an aeroplane.

It is known to use luggage trailers for loading an aeroplane that is to depart yet with pieces of luggage belonging to passengers of the plane in question or for unloading an aeroplane that has just landed, on which luggage trailers pieces of luggage are placed by airport personnel, which pieces of luggage are subsequently removed from the luggage trailer again after the luggage trailer has been moved between a luggage depot and the aeroplane in question, with the luggage trailers, which form a train, usually being moved by a towing vehicle. This manner of operation has a number of drawbacks, a very important one of which is the physical burden on the airport personnel, even to the extent that Occupational Health and Safety regulations impose significant restrictions in this regard and that the nature of the work frequently leads to airport personnel becoming unable to work temporarily or for prolonged periods of time. In addition to that, an important disadvantageous aspects of the known manner of luggage handling as described above is connected with the required physical contact between pieces of luggage and airport personnel, which enables airport personnel with malicious intent to use the pieces of luggage for smuggling goods or to steal pieces of luggage, or at least part of the contents thereof.

A vehicle as referred to in the introduction is known from International patent application WO 2004/071868 A1, which dicloses all the features of the preamble of claim 1. Said document discloses a luggage truck comprising a truck and a loading space for luggage and provided with a conveyor belt disposed in the loading space, which conveyor belt is used for supplying and discharging luggage as well as for storing the luggage, wherein the loading space is provided with several conveyor belts disposed next to and/or above each other. When such a luggage truck is used for transferring luggage between the loading space of the luggage truck and a loading space of an aeroplane, an external belt conveyor is used. Although it is indicated in said International patent application that it is possible to move such an external belt conveyor to the level of the belt conveyors disposed within the loading space each time, it cannot be seen how this could actually be realised without making the belt conveyors movable transversely to the longitudinal direction thereof within the loading space, since the driver's cabin is disposed directly in front of some of the belt conveyors in the loading space, and it would in any case not be possible for the external belt conveyor to connect to these belt conveyors in the loading space. It is perhaps for that reason that said International patent application prefers to use an embodiment in which the external belt conveyor is fixedly disposed and the belt conveyor in the loading space is moved to a level in which it connects to the external belt conveyor each time. To that end, the belt conveyors in the loading space are vertically and/or laterally movable within the loading space.

An important drawback of the luggage truck as disclosed in WO 2004/071868 is the complexity thereof, seeing that it must be possible to move the belt conveyors in vertical and/or in lateral direction within the loading space.

US patent US 3,066,817 discloses a luggage truck in which a stationary conveyor is present in the interior of the vehicle, which conveyor extends from the rear side of the vehicle to the front side of the vehicle. An extendable bridging conveyor is disposed at the front side of the vehicle, which conveyor is pivotable about a horizontal axis that extends perpendicularly to the longitudinal direction of the vehicle. Pieces of luggage can be transferred between the loading space of an aeroplane and the stationary conveyor inside the vehicle by means of said bridging conveyor. An important drawback of such a luggage truck is in any case its limited capacity for holding pieces of luggage.

A drawback both of the luggage truck according to WO 2004/0716868 A1 and of the luggage truck according to the US 3,066,817 is the limitation that it is only possible to transport pieces of luggage to a position near the opening in a luggage hold of an aeroplane when using such vehicles, so that the pieces of luggage must be handled manually yet within the hold in question, which means difficult labour conditions for the operators.

The object of the present invention is to provide a solution or an improvement as regards the aforesaid problems by providing a vehicle as referred to in the introduction and defined by the features of claim 1, wherein the bridging conveyor system comprises a first bridging conveyor as well as a guide system for extending the first bridging conveyor from the vehicle into the aeroplane by means of said guide system, said first bridging conveyor being built up of a number of conveying units which are pivotable relative to each other in at least two perpendicular directions. A suitable embodiment of a first bridging conveyor is shown in International patent application WO-A1-05/51356, for example. The bridging conveyor that is disclosed therein forms part of a vehicle and only functions to convey luggage between the hold of an aeroplane and another vehicle during the loading and unloading of an aeroplane. Said bridging conveyor comprises conveying units which are coupled together by coupling means that are pivotable about two perpendicular axes. By extending the first bridging conveyor from the vehicle according to the present invention, a stable bridging can be obtained between the vehicle and an aeroplane. The use of a vehicle according to the invention makes it possible to carry out the loading or unloading of pieces of luggage into or from an aeroplane with one and the same vehicle, whilst in addition the required human effort is minimal, because the first bridging conveyor can extend deep into the hold of an aeroplane from said vehicle.

For constructional reasons, and in order to achieve that the first bridging conveyor exhibits a constant flexibility along the length thereof, it is advantageous if the conveying units are at least substantially identical, in particular as regards their length.

The space below the conveying elements can be used efficiently for accommodating the first bridging conveyor and the associated guides. Consequently, one preferred embodiment is **characterised in that** the guide system comprises a guide member that extends below the conveying elements, which guide member very advantageously extends between supporting longitudinal beams that form part of the chassis of the vehicle.

In order to achieve that the first bridging conveyor extends into the aeroplane in a very stable manner, the guide system preferably comprises a further extendable guide member that can be extended from the vehicle so as to provide a guide for the first bridging conveyor from the vehicle at least to a position near an aeroplane.

According to a special preferred embodiment, one end of the first bridging conveyor is movable between positions above and/or beside one another near ends of the respective conveying elements for connecting the first bridging conveyor to the respective conveying elements. The use of a vehicle thus equipped furthermore makes it possible to use a simple design for the vehicle, and more specifically for the conveying elements thereof, because there is no need to make the conveying elements vertically or laterally movable (without excluding this possibility within the framework of the present invention). The vehicle is nevertheless capable of accommodating relatively many pieces of luggage, because use is made of a number of conveying elements disposed above and/or beside one another, wherein the connection thereof to an aeroplane can be effected by means of a single bridging conveyor. The first bridging conveyor of the bridging conveyor system is capable of connecting to each of the conveying elements, since one end thereof is movable between positions near ends of the respective conveying elements.

On the other hand, it is explicitly stated herein that it is possible, and possibly even advantageous, within the framework of the present invention for the vehicle to be provided with a second bridging conveyor in addition to the first bridging conveyor, one end of which second bridging conveyor is arranged for connection to the first bridging conveyor, whilst another end is arranged for connection to a conveying element for transferring pieces of luggage between the conveying element and the first bridging conveyor. Thus, the second bridging conveyor can be optimally geared to its function of transferring pieces of luggage between the second bridging conveyor and the respective conveying elements, whilst the first bridging conveyor may in that case be optimally geared to delivering or receiving pieces of luggage in the hold of an aeroplane, so that pieces of luggage are also transferred between the first bridging conveyor and the second bridging conveyor.

Generally, the second bridging conveyor preferably comprises an extendable bridging conveyor unit on a side that faces towards an aeroplane in use, which conveyor unit functions to extend the second bridging conveyor in the direction of the aeroplane, thus enabling the second bridging conveyor to contribute maximally to the transfer of pieces of luggage near an aeroplane by the second bridging conveyor.

For reasons of constructional simplicity it is preferable in that connection if, in the situation in which use is also made of a further extendable guide member, as already described above, the second bridging conveyor is pivotable about a horizontal and/or a vertical pivot axis.

Although this is not strictly necessary, as already said before, an important advantageous aspect of the present invention is the fact that is the conveying elements can take up fixed positions relative to the frame and consequently need not be movable with respect to the frame. Accordingly, a preferred embodiment of a vehicle according to the present invention is characterized to that effect.

On the other hand it may be advantageous for the conveying elements to be vertically adjustable so as to facilitate the loading and unloading process.

To achieve an optimum loading degree, it is advantageous if detection means are provided for detecting the vertical position of pieces of luggage present on a conveying element for the purpose of adjusting the associated conveying element for height in dependence on the detected vertical position of pieces of luggage, so that it is possible to make the vertical position of conveying elements relative to each other dependent on the height of pieces of luggage present on the conveying elements in question.

In order to enable a fully independent operation of the vehicle, the vehicle preferably comprises driving means for driving the conveying elements and the bridging conveyor system.

A very important preferred embodiment is characterized in that the conveying elements form part of a container that can be placed on the wheeled frame and be removed from said wheeled frame again. Thus, a container can first be loaded with pieces of luggage and subsequently be collected by a vehicle that takes the container and the luggage to an aeroplane, where the luggage is transferred to the aeroplane, to which end the vehicle is provided with all the equipment that is required for that purpose. The present preferred embodiment enables a more efficient use of the vehicles.

Within the framework of the latter preferred embodiment, the present invention also relates to a container that can be placed on a frame of a vehicle according to the invention, which container comprises a number of conveying elements disposed beside and/or above each other in the interior thereof.

The invention will be explained in more detail hereinafter by means of a description of a number of preferred embodiment of vehicle according to the invention, in which reference is made to the following figures:
Figures 1 and 2 are schematic, perspective views of the container that forms part of a preferred embodiment of a vehicle according to the invention during two successive stages of the loading thereof;
Figure 3 shows the vehicle to be used in combination with the container that is shown in figures 1 and 2;
Figure 4 shows the vehicle of figure 3 with the container that is shown in figures 1 and 2 present thereon;
Figures 5 and 6 are a perspective view and a side view, respectively, of the vehicle of figure 4 during the loading of pieces of luggage into an aeroplane;
Figure 7 shows a second preferred embodiment of a vehicle according to the invention during use thereof with an aeroplane; and
Figure 8 shows a third preferred embodiment of a vehicle according to the invention, which is to a limited extent different from the second preferred embodiment thereof.

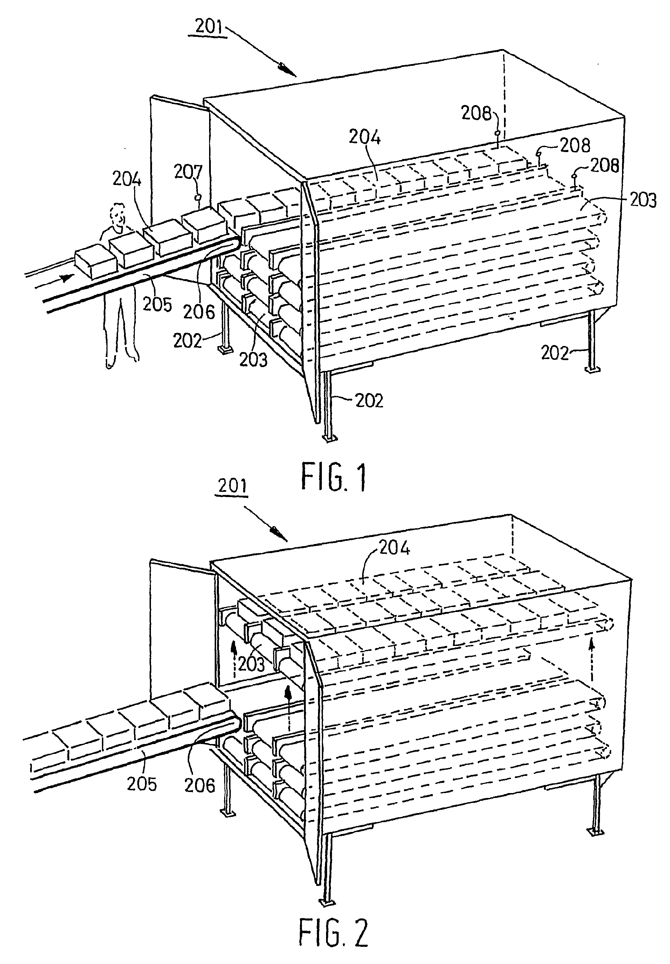

Figure 1 shows a container 201 whose bottom side is spaced from the ground by some distance via collapsible legs 202. Inside the container 201, four horizontal rows each comprising three conveyors 203 are provided above one another. The three (belt) conveyors 203 of each row are mechanically interconnected, which is not absolutely necessary within the framework of the present invention for that matter, but which is advantageous. The upper three rows of conveyors 203 are vertically adjustable. In figure 1 the vertically adjustable rows of conveyors 203 are still in their lowermost position.

A supply conveyor 205 is used for loading the container 201 with pieces of luggage 204, which supply conveyor can be manipulated (translated and/or pivoted) in such a manner that the downstream end 206 thereof is capable of connecting to every conveyor 203 in the lowermost positions thereof for transferring the pieces of luggage 204 from the supply conveyor 205 to the specified conveyor 203 of the container 201. To ensure that each conveyor 203 is loaded with pieces of luggage 204 over the entire length thereof, the supply conveyor 205 is provided with a sensor 207, which is capable of detecting the presence of a piece of luggage 204 at the downstream end 206 of the supply conveyor 205 and of controlling the conveyor 203 to which the supply conveyor 205 connects via a control system provided for that purpose to drive the conveyor 203 only upon transfer of a piece of luggage 204 from the supply conveyor 205 to the conveyor 203 in question. To prevent the loading of a specific conveyor 203 being continued to long, which would lead to pieces of luggage 204 falling off the conveyor 203 at the downstream end thereof, each conveyor 203 is provided at its downstream end with a sensor 208 capable of detecting the presence of a piece of luggage 204 and delivering a signal that the loading of the conveyor 203 in question is to be discontinued.

The loading of the conveyor 201 takes place by first loading the conveyors 203 of the upper row of conveyors 203, after which said row is moved up in its entirety to the position that is shown in figure 2 by moving means (not shown). At the same time the supply conveyor 205 is manipulated in such a manner that the downstream end 206 thereof connects to the next row (seen from above) of conveyors 203, so that also the entire next row of conveyors 203 can be loaded with pieces of luggage 204. When said next row of conveyors 203 is completely loaded, this row, too, is moved up in its entirety, so that the next row (positioned thereunder) becomes available for loading and can also be moved up when loaded, after which finally the lowermost, stationary row of conveyors 203 can be loaded by supplying pieces of luggage via the supply conveyor 205, which is of course manipulated in such a manner that it connects to the conveyor 203 that is to be loaded. If desired, use may be made of sensors that determine the height of the pieces of luggage on the conveyors 203, so that the extent to which the rows of conveyors 203 are moved up can be made dependent on the height of the pieces of luggage present thereon. Furthermore it is conceivable within the framework of the invention for the conveyors 203 to be individually adjustable for height rather than in rows.

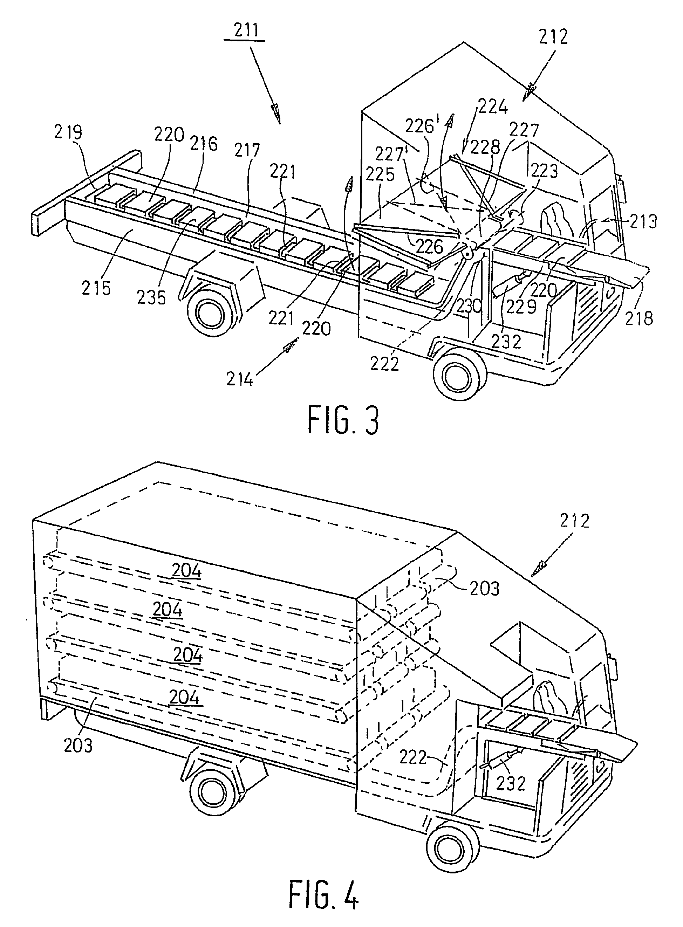

Figure 3 shows the vehicle 211 that is especially intended for use in combination with the container 201. The vehicle 211 comprises a cabin 212 provided with a driver's compartment 213 at the left-hand front side, whose width amounts to approximately 1/3 the width of the cabin 212. The chassis 214 extends behind the cabin 212 and comprises inter alia two supporting longitudinal beams 215, 216, on which the container 201 can be supported (also refer to figure 4).

The vehicle 211 is provided with an extendable, flexible bridging conveyor 217 having a front end 218 and a rear end 219. The length of the bridging conveyor might be increased by deflecting the bridging conveyor 217 in downward direction through 180° at the rear side of the vehicle 211 and subsequently having it extend in the direction of the front side of the vehicle 211 again, so that the bridging conveyor 217 will have the shape of a horizontal U at that location, with the open side facing towards the cabin 212. The bridging conveyor 217 comprises a number of subconveyors 220, which are pivotally interconnected in two directions perpendicular to each other via hinges 221. Each subconveyor 220 has an upper surface 235 made up of a conveyor belt that can be driven in the longitudinal direction of the bridging conveyor 217. For a more detailed description of such a bridging conveyor 217 reference is made to International patent application WO-A1-01/51356. The width of the subconveyors 220 is substantially the same as that of the conveyors 203 of the container 201. The bridging conveyor 217 is located in the centre of the width of the vehicle 211, i.e. at the same transverse position as the middle conveyors 203 of each of the four rows of conveyors 203 in the situation in which a container 201 is supported on the vehicle 211 (figure 4). At the rear side of the bend 222 (yet to be discussed) in the guide for the bridging conveyor 217, the bridging conveyor is positioned between the longitudinal beams 215, 216.

Within the vehicle 211, the bridging conveyor 217 is supported on a guide that exhibits an upward bend 222 behind the driver's compartment 213. At the upper side of said bend 222, a second bridging conveyor 224 is pivotally connected to the guide about a horizontal pivot axis 223. The second bridging conveyor 224 extends behind the driver's compartment 213, practically entirely within the cabin 212, having a width that corresponds to the width of each of the rows of conveyors 203 in the container 201. Two guides 226, 227, which are pivotable about pivot axes that are oriented perpendicularly to the conveyor belt 225, are provided above the conveyor belt 225, which guides extend obliquely towards the centre of the width thereof, thus creating a trap hole 228 between the guides 226, 227 in figure 3, which connects to the bridging conveyor 217 past the bend 222.

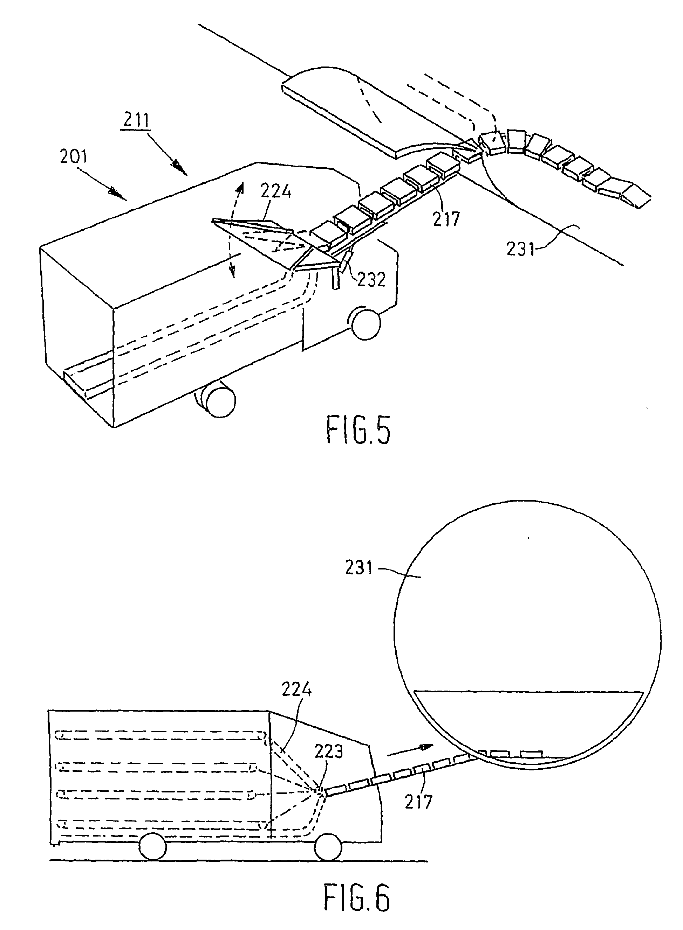

To unload the container 201, which has been loaded in the manner as explained above with reference to figures 1 and 2, the container will first have to be picked up by the vehicle 211, which is reversed between the legs 202 of the container 201, after which at least the chassis 214 is moved upwards, so that the container 201 will be supported on the vehicle 211 and the legs 202 can be swung away. The vehicle 211 carrying the container 201 is then driven to an aeroplane 231, where the bridging conveyor 217 is extended from the vehicle 211 into the hold of the aeroplane 231 (figure 5). The driver in the driver's compartment 213 can keep an eye on the situation at all times. Insofar as this should be necessary, the bridging conveyor 217 is further supported between the vehicle 211 and the aeroplane 231. Such a support might also be extended from the vehicle 211 in the form of some kind of ladder. To make it possible to orient the bridging conveyor 217 correctly with respect to the aeroplane 231, the front end 229 is pivotally connected to the upper side of the bend 230 about a horizontal pivot axis 230. The front guide portion 229 can be placed in the most suitable angular position by means of the piston-cylinder assembly 232.

To unload the container 201, the bridging conveyor 224 is pivoted about the pivot axis 223 in such a manner that it connects to one of the rows of conveyors 203. Pieces of luggage 204 are transported into the aeroplane 231 from one of the conveyors 203 by driving the conveyor 203 of the row in question and simultaneously driving the conveyor belt 225 of the bridging conveyor 224 and of the bridging conveyor 217. Once a conveyor 203 has been completely emptied, a next full conveyor 203 of the row in question is activated. Once all the conveyors 203 of a particular row have been emptied, the bridging conveyor 224 is pivoted to another row of conveyors 203 for unloading said conveyors as well. It will be understood that pieces of luggage 204 that are present on one of the two outer conveyors 203 of a row of conveyors 203 are urged towards the bridging conveyor 217 by the guides 226, 227.

The range within which the bridging conveyor 224 must be able to pivot about the pivot axis 223 can be limited by having the unloading take place from the lowermost row of conveyors 203. Once a row of conveyors 203 has been completely unloaded, the row of conveyors 203 positioned above said row can be lowered, so that the bridging conveyor 224 need not be pivoted upwards so far.

Precisely the reverse procedure will be followed for unloading an aeroplane 231 (which has just landed) as for loading an aeroplane 231 (which is to depart), as described in great detail in the foregoing. Pieces of luggage 204 are loaded onto the respective conveyors 203 of the container 201 via the extended bridging conveyor 217 and the bridging conveyor 224. It is important in that connection that the guides 226, 227 for the outer conveyors 203 be placed in a different angular position, so that the pieces of luggage 204 are urged towards the outer conveyors 203 in question. These alternative positions are indicated at 226' and 227' in figure 3.

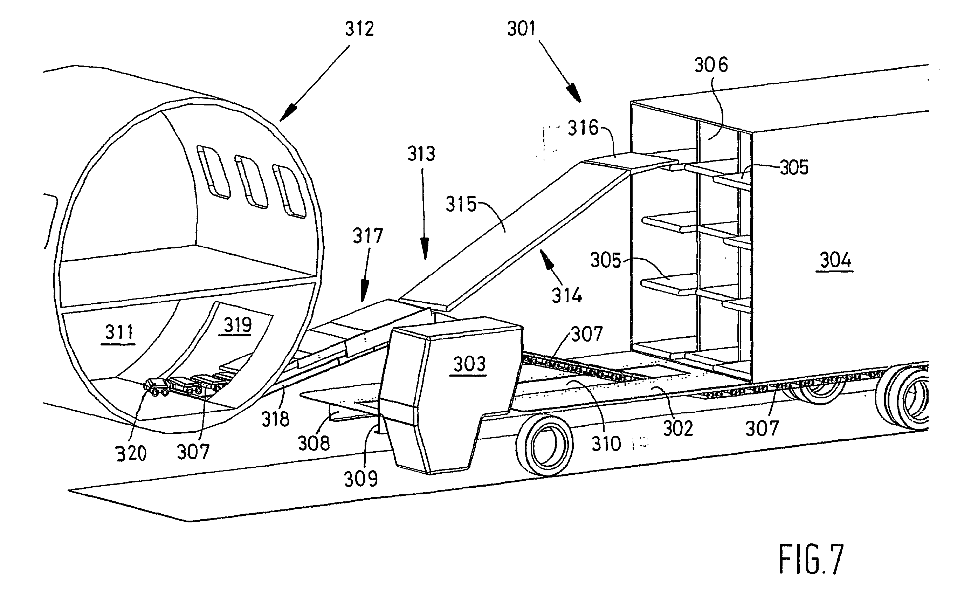

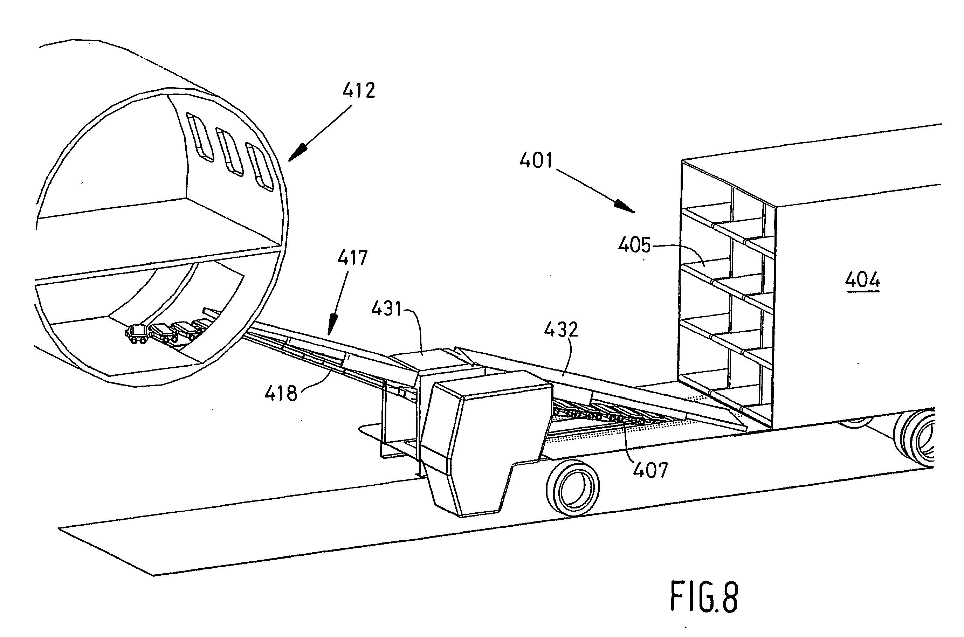

Instead of using the relatively wide bridging conveyor 224 with guides 226, 227 it is alternatively also possible to use a conveyor having a width substantially the same as that of the bridging conveyor 227, which conveyor can pivot to the left and to the right as well as upwards and downwards. Such a situation occurs with the embodiments that are shown in figures 7 and 8. Figure 7 shows a vehicle 301 comprising a loading platform 302 and a driver's cabin 303. Present on the loading platform 302 is a container 304 provided with four rows of conveyors 305 disposed one above another, each row consisting of three conveyors 305 arranged beside each other. Partition surfaces 306 are provided within the container 304 between the three vertical columns of four conveyors 305 each.

The container 304 can be loaded with pieces of luggage separately from the vehicle 301 in a manner that has already been explained in the discussion of figures 1 and 2 with reference to the container 201. The conveyors 305 are not vertically adjustable in this case, which has a positive effect as regards the simplicity of the construction of the container 304.

The vehicle 301 further comprises a flexible bridging conveyor 307 similar to the flexible bridging conveyor 217. Said flexible bridging conveyor 307 extends partially below the container 304 under the loading platform 302 between two supporting longitudinal beams 308, 309 of the vehicle 301. An opening 310 is provided in the loading platform 302 at the front side of the container 304, through which opening 310 the bridging conveyor 307 extends in an upwardly sloping direction, to which end the bridging conveyor 307 is guided in upwardly sloping guides at that location. In this situation that is shown in figure 7, the bridging conveyor 307 is extended into the hold 311 of an aeroplane 312.

The vehicle 301 furthermore comprises a second bridging conveyor 313, which is provided with a pivotable subconveyor 314 comprising mutually pivotable sub-conveying units 315, 316 on the side of the container 304 and with an extendable subconveyor 317 known as a (telescopic) belt conveyor to those skilled in the art on the side of the aeroplane. A guide 318 for the flexible bridging conveyor 307, which can be extended together with the subconveyor 317, is provided under the extendable subconveyor 317 .

The pivotable subconveyor 314 can on the one hand pivot upwards and downwards about a horizontal axis perpendicular to the longitudinal direction of the vehicle 301, which is located at the position where the subconveyors 314 and 317 meet, so as to connect to the conveyors 305 of the four rows of conveyors 305, whilst in addition the subconveyor 314 can pivot about a vertical pivot axis in the centre of the width of the vehicle 301, which is likewise located in the immediate vicinity of the transition between the subconveyors 314 and 317 beside the driver's cabin 303, as a result of which the subconveyor 314 can connect to the desired conveyor 305 of each row of conveyors 305 on the side of the sub-conveying unit 316. Suitable pivoting of the sub-conveying units 315 and 316 relative to each other enables the sub-conveying unit 316 to connect horizontally to the conveyor 305 in question, which helps to achieve a reliable transfer of pieces of luggage therefrom to the sub-conveying unit 316 (or generally the sub-conveying unit 314 or more generally the second bridging conveyor 313). To enable such an adequate connection between the subconveyor 314 on the one hand and the various conveyors 305 in the container 304 on the other hand, the ends of the conveyors 305 present on the outer side extend further toward the front than those of the more centrally positioned conveyors 305, as is shown in figure 7.

The extendable subconveyor 317 is also pivotable about a horizontal pivot axis located at the end of the extendable subconveyor 317 that connects to the pivotable subconveyor 314.

To load the hold 311 of the aeroplane 312 with pieces of luggage present in the container 304, the vehicle 301 is driven to a position near the aeroplane 312 by a driver in the driver's cabin 303, after which the extendable subconveyor 317 is extended and pivoted until said subconveyor or at least the associated guide 318 extends into the hold 311 via the opening 319 or at least to a position in the immediate vicinity thereof. Then the flexible bridging conveyor 307 is extended in the associated guides, among which the guide 318, until the end 320 thereof is positioned inside the hold 311. Then the subconveyor 314 is pivoted to a position in which it connects to one of the conveyors 305. Subsequently the pieces of luggage present on the conveyor 305 in question are transferred to the second bridging conveyor 313 and to the flexible bridging conveyor 307 at the free end of the extendable subconveyor 317 by activating the drive of the conveyor 305 in question. After the conveyor 305 in question has been completely emptied, the pivotable subconveyor 314 is pivoted to a next conveyor 305 so as to unload said conveyor as well. Thus, all the pieces of luggage present in the container 304 can be loaded into the hold 311 of the aeroplane 312 with a minimal human effort.

On the basis of the foregoing it will furthermore be apparent to those skilled in the art that it is also possible, using the vehicle 301 as described in combination with a container 304, to unload the hold 311 of the aeroplane 312 and load pieces of luggage into the container 304. An important advantage of the use of both the flexible bridging conveyor 307 and the second bridging conveyor 313 is the relative freedom in selecting the position of the vehicle 310 with respect to the aeroplane 312, especially because the flexible bridging conveyor 307 need not be fully extended. Moreover, the free end 320 of the bridging conveyor can extend relatively far from the vehicle 301.

The embodiment that is shown in figure 8 only differs from the embodiment that is shown in figure 7 to a limited extent. The difference is in particular to be found in the embodiment of the second bridging conveyor 413, which substantially consists of an extendable subconveyor 417 comprising an extendable guide 418 for the flexible bridging conveyor 417, a fixed subconveyor 431 and a pivotable but also extendable subconveyor 432. Because of the possibility to extend and retract the subconveyor 432 and thus change the length thereof, the ends of the conveyors 405 of the container 404 may be located at the same longitudinal position, seen in the longitudinal direction of the vehicle 401.

Although a second bridging conveyor 224, 313, 413 has been used in all the preferred embodiments that have been discussed so far, the use of such a second bridging conveyor is not essential within the framework of the present invention. The fact is that it is alternatively possible within the framework of the present invention not to use such a second bridging conveyor, in which case the flexible bridging conveyor 217, 307, 407 in question is guided in a horizontally and vertically pivotable guide, which is capable of connecting the rear end of the flexible bridging conveyor 217, 307, 407 in question with the conveyor 203, 305, 405. In that case it would be necessary, of course, to provide a guiding arrangement (of which the aforesaid pivotable guide forms part) for guiding the flexible conveyor 203, 305, 405 between the container 201, 304, 404 and the aeroplane 231, 313, 412.

## Claims

1. A vehicle (211) for moving separate pieces of luggage (204) between a luggage depot and an aeroplane (231,312), which vehicle comprises a wheeled frame (214), which wheeled frame is provided with conveying means comprising a number of conveying elements (203) disposed above and/or beside one another for conveying separate pieces of luggage between ends of the respective conveying elements with respect to the frame, which vehicle further comprises a bridging conveyor system for conveying pieces of luggage between the respective conveying elements and an aeroplane, **characterised in that** the bridging conveyor system comprises a first bridging conveyor (217) as well as a guide system for extending the first bridging conveyor (217) from the vehicle (211) into the aeroplane (231,312) by means of said guide system, said first bridging conveyor being built up of a number of conveying units (220) which are pivotable relative to each other in at least two perpendicular directions and, **in that** the guide system comprises a guide member that extends below the conveying elements (202) and **in that** the vehicle is provided with a second bridging conveyor (224), one end of which is arranged for connection to the first bridging conveyor (217), whilst another end is arranged for connection to a conveying element of the converying means (203) for transferring pleces of luggage (204) between the conveying element and the first bridging converyor

2. A vehicle according to claim 1, **characterised in that** the conveying units (220) are at least substantially identical.

3. A vehicle according to claim 1 or 2, **characterised in that** said guide member extends between supporting longitudinal beams (215,216) that form part of the chassis of the vehicle.

4. A vehicle according to claim 1 or 2, **characterised in that** the guide system comprises a further extendable guide member that can be extended from the vehicle so as to provide a guide for the first bridging conveyor (217) from the vehicle at least to a position near an aeroplane.

5. A vehicle according to any one of the preceding claims, **characterised in that** the second bridging conveyor comprises an extendable bridging conveyor unit (317,417) on a side that faces towards an aeroplane in use, which conveyor unit functions to extend the second bridging conveyor in the direction of the aeroplane.

6. A vehicle according to claims 4 and 5, **characterised in that** said extendable bridging conveyor unit and said further extendable guide member can be jointly extended.

7. A vehicle according to any one of the preceding claims, **characterised in that** the second bridging conveyor is pivotable about a horizontal pivot axis.

8. A vehicle according to any one of the preceding claims, **characterised in that** the second bridging conveyor is pivotable about a vertical pivot axis.

9. A vehicle according to any one of the preceding claims, **characterised in that** the conveying elements take up fixed positions relative to the frame.

10. A vehicle according to any one of the claims 1-8, **characterised in that** said conveying elements are adjustable for height.

11. A vehicle according to claim 10, **characterised in that** detection means are provided for detecting the vertical position of pieces of luggage present on a conveying element for the purpose of adjusting the associated conveying element for height in dependence on the detected vertical position of pieces of luggage.

12. A vehicle according to any one of the preceding claims, **characterised in that** the vehicle comprises driving means for driving the conveying elements and the bridging conveyor system.

13. A vehicle according to any one of the preceding claims, **characterised in that** the conveying elements form part of a container (201,304,404) that can be placed on the wheeled frame and be removed from said wheeled frame again.

14. A container that can be placed on a frame of a vehicle according to claim 13, which container comprises a number of conveying elements disposed beside and/or above each other in the interior thereof.

## Patentansprüche

1. Fahrzeug (211) zum Bewegen von einzelnen Gepäckstücken (204) zwischen einem Gepäckdepot und einem Flugzeug (231, 312), welches Fahrzeug einen mit Rädern versehenen Rahmen (214) aufweist, welcher mit Rädern versehene Rahmen mit einer Fördereinrichtung versehen ist, die eine Anzahl von Förderelementen (203) enthält, die übereinander und/oder nebeneinander angeordnet sind, um einzelne Gepäckstücke zwischen Enden der jeweiligen Förderelemente in Bezug auf den Rahmen zu transportieren, welches Fahrzeug ferner ein Überbrückungsfördersystem zum Transportieren von Gepäckstücken zwischen den jeweiligen Förderelementen und einem Flugzeug aufweist, **dadurch gekennzeichnet, dass** das Überbrückungsfördersystem einen ersten Überbrückungsförderer (217) sowie ein Führungssystem zum Ausfahren des ersten Überbrückungsförderers (217) von dem Fahrzeug (211) in das Flugzeug (231, 312) mittels des Führungssystems enthält, wobei der erste Überbrückungsförderer aus einer Anzahl von Fördereinheiten (220) aufgebaut ist, die relativ zueinander in mindestens zwei zueinander senkrechten Richtungen schwenkbar sind, **dadurch**, dass das Fördersystem ein Führungselement aufweist, das sich unter den Förderelementen (203) erstreckt, und **dadurch**, dass das Fahrzeug mit einem zweiten Überbrückungsförderer (224) versehen ist, dessen eines Ende für eine Verbindung zum ersten Überbrückungsförderer (217) ausgelegt ist, während ein anderes Ende für eine Verbindung zu einem Förderelement (203) zum Transportieren von Gepäckstücken (204) zwischen dem Förderelement (203) und dem ersten Überbrückungsförderer (217) ausgelegt ist.

2. Fahrzeug nach Anspruch 1, **dadurch gekennzeichnet, dass** die Fördereinheiten (220) zumindest im Wesentlichen identisch sind.

3. Fahrzeug nach Anspruch 1 oder 2, **dadurch gekennzeichnet, dass** das Führungselement zwischen in Längsrichtung verlaufenden Stützträgern (215, 216) verläuft, die einen Teil des Fahrgestells des Fahrzeugs bilden.

4. Fahrzeug nach Anspruch 1 oder 2, **dadurch gekennzeichnet, dass** das Führungssystem ein weiter ausfahrbares Führungselement enthält, das von dem Fahrzeug ausgefahren werden kann, um so eine Führung für den ersten Überbrückungsförderer (217) von dem Fahrzeug mindestens zu einer Position nahe am Flugzeug bereitzustellen.

5. Fahrzeug nach einem der vorstehenden Ansprüche, **dadurch gekennzeichnet, dass** der zweite Überbrückungsförderer eine ausfahrbare Überbrückungsförderereinheit (317, 417) auf einer Seite enthält, die während der Verwendung zu einem Flugzeug weist, welche Förderereinheit so funktioniert, dass sie den zweiten Überbrückungsförderer in Richtung des Flugzeugs erweitert.

6. Fahrzeug nach Anspruch 4 und 5, **dadurch gekennzeichnet, dass** die ausfahrbare Überbrückungsförderereinheit und das weiter ausfahrbare Führungselement zusammen ausgefahren werden können.

7. Fahrzeug nach einem der vorstehenden Ansprüche, **dadurch gekennzeichnet, dass** der zweite Überbrückungsförderer um eine horizontale Drehachse schwenkbar ist.

8. Fahrzeug nach einem der vorstehenden Ansprüche, **dadurch gekennzeichnet, dass** der zweite Überbrückungsförderer um eine vertikale Drehachse schwenkbar ist.

9. Fahrzeug nach einem der vorstehenden Ansprüche, **dadurch gekennzeichnet, dass** die Förderelemente festgelegte Positionen relativ zum Rahmen einnehmen.

10. Fahrzeug nach einem der Ansprüche 1-8, **dadurch gekennzeichnet, dass** die Förderelemente höhenverstellbar sind.

11. Fahrzeug nach Anspruch 10, **dadurch gekennzeichnet, dass** eine Erfassungseinrichtung vorgesehen ist, um die vertikale Position von auf einem Förderelement vorhandenen Gepäckstücken zu erfassen, zum Zweck der Höheneinstellung des zugehörigen Förderelements in Abhängigkeit von der erfassten vertikalen Position der Gepäckstücke.

12. Fahrzeug nach einem der vorstehenden Ansprüche, **dadurch gekennzeichnet, dass** das Fahrzeug eine Antriebseinrichtung zum Antrieb der Förderelemente und des Überbrückungsförderersystems enthält.

13. Fahrzeug nach einem der vorstehenden Ansprüche, **dadurch gekennzeichnet, dass** die Förderelemente einen Teil eines Behälters (201, 304, 404) bilden, der auf dem mit Rädern versehenen Rahmen platziert werden kann und von dem mit Rädern versehenen Rahmen wieder abgenommen werden kann.

14. Behälter, der auf einem Rahmen eines Fahrzeugs nach Anspruch 13 angeordnet werden kann, welcher Behälter eine Anzahl von Förderelementen enthält, die in seinem Inneren nebeneinander und/oder übereinander angeordnet sind.

## Revendications

1. Véhicule (211) destiné au transport de bagages séparés (204) entre un dépôt de bagages et un avion (231, 312), ledit véhicule comprenant un châssis monté sur roues (214), ledit châssis monté sur roues étant équipé d'un moyen de convoyage comportant un certain nombre d'éléments de convoyage (203) disposés au dessus de et/ou à côté des uns des autres afin de convoyer des bagages séparés entre les extrémités des éléments de convoyage respectifs par rapport au châssis, ledit véhicule comprenant en outre un système de convoyeur de transbordement destiné à convoyer des bagages entre les éléments respectifs de convoyage et un avion, **caractérisé en ce que** le système de convoyeur de transbordement comprend un premier convoyeur de transbordement (217) en même temps qu'un système de guidage destiné à déployer le premier convoyeur de transbordement (217) depuis le véhicule (211) jusqu'à l'intérieur de l'avion (231, 312) par le moyen dudit système de guidage, ledit premier convoyeur de transbordement (217) étant constitué d'un certain nombre d'unités de convoyage (220) qui sont mobiles en rotation les unes par rapport aux autres dans au moins deux directions perpendiculaires, et **en ce que** le système de guidage comprend un élément de guidage qui s'étend au dessous des éléments de convoyage (203) et **en ce que** le véhicule est équipé d'un second convoyeur de transbordement (224), une extrémité de celui-ci étant étant disposée pour être reliée au premier convoyeur de transbordement (217), pendant que l'autre extrémité est disposée pour être reliée à un élément de convoyage (203) du moyen de convoyage pour transporter des bagages (204) entre l'élément de convoyage et le premier convoyeur de transbordement.

2. Véhicule selon la revendication 1, **caractérisé en ce qu** les unités de convoyage (220) sont au moins sensiblement identiques.

3. Véhicule selon la revendication 1 ou 2, **caractérisé en ce que** ledit élément de guidage s'étend entre des poutres longitudinales de support (215, 216) qui font partie du châssis du véhicule.

4. Véhicule selon la revendication 1 ou 2, **caractérisé en ce que** le système de guidage comporte un autre élément de guidage extensible qui peut se déployer à partir du véhicule de façon à former un guide pour le premier convoyeur de transbordement (217) à partir du véhicule jusqu'à au moins un emplacement voisin de l'avion.

5. Véhicule selon l'une quelconque des revendications précédentes, **caractérisé en ce que** le second convoyeur de transbordement comporte une unité de convoyeur de transbordement extensible (317, 417) sur le côté qui, en service, fait face à l'avion, ladite unité de convoyeur de transbordement ayant pour rôle d'étendre le second conveyeur de transbordement dans la direction de l'avion.

6. Véhicule selon les revendications 4 et 5, **caractérisé en ce que** ladite unité de convoyeur de transbordement extensible et ledit autre élément de guidage extensible peuvent être déployés conjointement.

7. Véhicule selon l'une quelconque des revendications précédentes, **caractérisé en ce que** le second convoyeur de transbordement est mobile en rotation autour d'un axe de rotation horizontal.

8. Véhicule selon l'une quelconque des revendications précédentes, **caractérisé en ce qu** le second convoyeur de transbordement est mobile en rotation autour d'un axe de rotation vertical.

9. Véhicule selon l'une quelconque des revendications précédentes, **caractérisé en ce que** les éléments de convoyage prennent des positions fixes par rapport au châssis.

10. Véhicule selon l'une quelconque des revendications 1 à 8, **caractérisé en ce que** lesdits éléments de convoyage sont réglables en hauteur.

11. Véhicule selon la revendication 10, **caractérisé en ce qu'**il est disposé un moyen de détection pour détecter la position verticale des bagages présents sur un élément de convoyage dans le but d'ajuster en hauteur l'élément de convoyage associé en fonction de la position verticale détectée pour les bagages.

12. Véhicule selon l'une quelconque des revendications précédentes, **caractérisé en ce que** le véhicule comprend un moyen d'entraînement destiné à entraîner les éléments de convoyage et le système de convoyeur de transbordement.

13. Véhicule selon l'une quelconque des revendications précédentes, **caractérisé en ce que** les éléments de convoyage font partie d'un conteneur (201, 304, 404) qui peut être placé sur le châssis monté sur roues et être retiré par la suite dudit châssis monté sur roues.

14. Conteneur pouvant être placé sur le châssis de véhicule selon la revendication 13, lequel conteneur comporte un certain nombre d'éléments de convoyage disposés à côté de et/ou au dessous des uns des autres à l'intérieur de celui-ci.
